# EUROPÄISCHE PATENTANMELDUNG

(11) **EP 4 775 831 A1**
(43) Veröffentlichungstag der Anmeldung: **15.07.2026**
(21) Anmeldenummer: 25151861.9
(22) Anmeldetag: 14.01.2025
(51) Int. Cl.: F03D 5/00

(54) **VERFAHREN ZUM BETREIBEN EINER ENERGIEERZEUGUNGSVORRICHTUNG, STEUEREINHEIT FÜR EINE ENERGIEERZEUGUNGSVORRICHTUNG, ENERGIEERZEUGUNGSVORRICHTUNG, COMPUTERPROGRAMMPRODUKT**

(71) Anmelder: SkySails Group GmbH, 20537 Hamburg (DE)
(72) Erfinder: Bungart, Merlin, 20537 Hamburg (DE); Paulig, Xaver, 22769 Hamburg (DE); Soliman, Mahmoud, 20537 Hamburg (DE); Specht, Bernd, 20537 Hamburg (DE)
(74) Vertreter: GLAWE DELFS MOLL

(57) **Zusammenfassung**

Verfahren zum Betreiben einer Energieerzeugungsvorrichtung, wobei die Energieerzeugungsvorrichtung eine Basisstation (28) und ein Kitesystem (23) umfasst. Das Kitesystem (23) umfasst einen Kite (14) und eine Gondel (25), wobei der Kite (14) über einen Leinenbaum (24) mit der Gondel (25) verbunden ist. Die Gondel (25) ist über ein Zugseil (15) mit der Basisstation (28) verbunden. Über eine mit dem Zugseil (15) ausgeübte Zugkraft wird elektrische Energie erzeugt, wobei der Kite (14) abwechselnd in einen ersten Betriebszustand (41) und einen zweiten Betriebszustand (42) gebracht wird. Im zweiten Betriebszustand (42) ist der Trimmwinkel (43) des Kite (14) kleiner ist als im ersten Betriebszustand (41). Im zweiten Betriebszustand (42) wird der Kite (14) durch Einholen des Zugseils (15) an die Basisstation (28) herangeholt, wobei die Einholgeschwindigkeit in Abhängigkeit von einem den Flugzustand des Kite (14) repräsentierenden Betriebsparameter (49) der Energieerzeugungsvorrichtung verändert wird. Die Erfindung betrifft auch eine Steuereinheit für eine Energieerzeugungsvorrichtung, eine Energieerzeugungsvorrichtung und ein Computerprogrammprodukt.

## Beschreibung

Die Erfindung betrifft ein Verfahren zum Betreiben einer Energieerzeugungsvorrichtung, eine Steuereinheit für eine Energieerzeugungsvorrichtung, eine Energieerzeugungsvorrichtung und ein Computerprogrammprodukt.

Zum Erzeugen elektrischer Energie kann mit einem Kite eine Zugkraft auf ein Zugseil ausgeübt werden, sodass über das Zugseil ein Generator angetrieben wird. Durch geeignete Einstellung der aerodynamischen Eigenschaften des Kites kann das Kitesystem entlang von Flugbahnen bewegt werden, bei denen sich eine hohe Zugkraft einstellt. Die Flugbahnen sind im Wesentlichen senkrecht zu dem Zugseil ausgerichtet.

Das Zugseil wird ausgefiert, während mit dem Generator elektrische Energie bezeugt wird, der Abstand zwischen dem Kite und der Basisstation vergrößert sich also in dieser Phase. Die Energieerzeugung wird unterbrochen, wenn das Zugseil auf seine maximale Länge ausgefiert ist. Das Zugseil muss dann unter Aufwendung von Energie eingeholt werden, bevor erneut elektrische Energie erzeugt werden kann. Die Phase, in der elektrische Energie erzeugt wird, wird als Powerphase bezeichnet. Die Phase, in der das Zugseil eingeholt wird, wird als Rückholphase bezeichnet. Der Überschuss an elektrischer Energie zwischen der Powerphase und der Rückholphase steht für andere Zwecke zur Verfügung und kann beispielsweise in ein Stromnetz eingespeist werden.

Für den Wirkungsgrad einer solchen Energieerzeugungsvorrichtung ist es von Vorteil, wenn das Zugseil in der Rückholphase mit möglichst kleiner Kraft eingeholt werden kann. Eine mögliche Vorgehensweise ist es, den Kite in einer vor Beginn der Rückholphase liegenden Übergangsphase in eine Position zu führen, in der der Wind nur eine geringe Zugkraft auf den Kite ausübt, EP 4 174 311 A1. Dies kann beispielsweise eine Position sein, in der sich das Zugseil im Wesentlichen senkrecht zur Windrichtung erstreckt. Da in der Übergangsphase nicht in nennenswertem Umfang elektrische Energie erzeugt werden kann, wird durch eine solche Übergangsphase der Wirkungsgrad der Energieerzeugungsvorrichtung vermindert.

Der Erfindung liegt die Aufgabe zugrunde, ein Verfahren zum Betreiben einer Energieerzeugungsvorrichtung, eine Steuereinheit für eine Energieerzeugungsvorrichtung, eine Energieerzeugungsvorrichtung sowie ein Computerprogrammprodukt vorzustellen, mit denen die genannten Nachteile vermindert werden. Die Aufgabe wird gelöst mit den Merkmalen der unabhängigen Ansprüche. Vorteilhafte Ausführungsformen sind in den Unteransprüchen angegeben.

Bei einem erfindungsgemäßen Verfahren zum Betreiben einer Energieerzeugungsvorrichtung umfasst die Energieerzeugungsvorrichtung eine Basisstation und ein Kitesystem. Das Kitesystem umfasst einen Kite und eine Gondel, wobei der Kite über einen Leinenbaum mit der Gondel verbunden ist und wobei die Gondel über ein Zugseil mit der Basisstation verbunden ist. Es wird über eine mit dem Zugseil ausgeübte Zugkraft elektrische Energie erzeugt, wobei der Kite abwechselnd in einen ersten Betriebszustand und einen zweiten Betriebszustand gebracht wird. Im zweiten Betriebszustand ist der Trimmwinkel des Kite kleiner als im ersten Betriebszustand. Im zweiten Betriebszustand wird der Kite durch Einholen des Zugseils an die Basisstation herangeholt, wobei die Einholgeschwindigkeit in Abhängigkeit von einem den Flugzustand des Kite repräsentierenden Betriebsparameter der Energieerzeugungsvorrichtung verändert wird.

Erfindungsgemäß wird zwischen dem ersten Betriebszustand und dem zweiten Betriebszustand der Trimmwinkel des Kites verändert. Ausgehend von einem Flugzustand in der Powerphase, in dem der Kite eine hohe Zugkraft auf das Zugseil ausübt, geht mit einer Verkleinerung des Trimmwinkels eine verminderte Zugkraft einher. Wird aber der Trimmwinkel zu stark verkleinert, so kann es zu einem unerwünschten Abtrieb im vorderen Kitesegment und damit zu einem Verlust der Fesselung und zu einem instabilen Flugzustand des Kite kommen. Eine beliebige Verkleinerung des Trimmwinkels zum Zwecke einer Verminderung der Zugkraft ist deswegen nicht möglich.

Mit der Erfindung wird vorgeschlagen, während der Rückholphase über die Einholgeschwindigkeit des Zugseils Einfluss auf den Flugzustand des Kites zu nehmen. Die Erfindung hat erkannt, dass eine Erhöhung der Einholgeschwindigkeit sich stabilisierend auf den Flugzustand des Kites auswirkt. Droht also beispielsweise ein instabiler Flugzustand des Kites, so kann diesem durch eine Erhöhung der Einholgeschwindigkeit entgegengewirkt werden. Der Kite kann während der Powerphase im ersten Betriebszustand sein und während der Rückholphase im zweiten Betriebszustand sein.

Da der Strömungszustand in der Praxis nicht direkt gemessen werden kann, wird gemäß der Erfindung anhand eines Betriebsparameters des Kitesystems auf den Flugzustand geschlossen. Ein Betriebsparameter in diesem Sinne ist jeder Parameter der Energieerzeugungsvorrichtung, der in einer Korrelation mit dem Flugzustand des Kites steht. Der Betriebsparameter wird einer Steuereinheit des Kitesystems als Eingangsgröße zugeführt, beispielsweise in Form eines Messwerts des Betriebsparameters. Der Betriebsparameter wird in der Steuereinheit verarbeitet, um einen Steuerbefehl zum Einstellen der Einholgeschwindigkeit zur erzeugen. Die Einholgeschwindigkeit wird anhand des Steuerbefehls eingestellt. Eine Änderung des Betriebsparameters führt zu einem geänderten Steuerbefehl und damit zu einer Änderung der Einholgeschwindigkeit. Durch die Abhängigkeit zwischen dem Betriebsparameter und der Einholgeschwindigkeit unterscheidet sich die Erfindung von einer konventionellen Vorgehensweise, bei der der Kite unabhängig vom aktuellen Flugzustand mit einer vorgegebenen Einholgeschwindigkeit eingeholt wird.

Der Kite hat eine Vorderkante und eine Hinterkante, die in Flugrichtung hintereinander liegen. Im Flug wird die anströmende Luft an der Vorderkante getrennt und an der Hinterkante wieder vereinigt. Es gibt eine Profil-Mittellinie, die sich geradlinig und auf kürzestem Weg zwischen der Vorderkante und der Hinterkante des Kites erstreckt. In der seitlichen Dimension und damit quer zur Richtung der Profil-Mittellinie betrachtet kann die Profil-Mittellinie in der Mitte des Kites liegen, so dass die Profil-Mittellinie denselben Abstand zu den beiden seitlichen Enden des Kites hat. In ihrer Längsrichtung hat die Profil-Mittellinie einen zentralen Punkt, der zur Vorderkante und zur Hinterkante des Kites denselben Abstand hat. Der Trimmwinkel ist definiert als der Winkel, der zwischen einer Trimmlinie und dem von dem zentralen Punkt der Profil-Mittellinie zur Vorderkante des Kites verlaufenden Teil der Profil-Mittellinie eingeschlossen ist. Die Trimmlinie verläuft geradlinig zwischen dem zentralen Punkt der Profil-Mittellinie und dem Verbindungspunkt zwischen dem Zugseil und dem Kitesystem. Bei einer Verkleinerung des Trimmwinkels verschiebt sich die Position der Vorderkante nach unten und/oder die Position der Hinterkante nach oben. Bei einer Vergrößerung des Trimmwinkels verschiebt sich die Position der Vorderkante nach oben und/oder die Position der Hinterkante nach unten. Der Trimmwinkel im ersten Betriebszustand kann beispielsweise zwischen 80 Grad und 90 Grad liegen. Der Trimmwinkel im zweiten Betriebszustand kann beispielsweise zwischen 20 Grad und 50 Grad liegen.

Für eine hohe Leistungsabgabe ist es von Vorteil, wenn der Kite so geführt wird, dass das Zugseil in der Powerphase möglichst parallel zur Windrichtung ausgezogen wird. Für die Rückholphase ist eine Kombination aus einem kurzen Rückholweg und einer geringen Zugkraft günstig. Bei konventioneller Vorgehensweise wie in EP 4 174 311 Al, bei der auf eine Veränderung des Trimmwinkels verzichtet wird, führt diese Kombination von Anforderungen für die Rückholphase dazu, dass der Kite in der Rückholphase weit nach außen an den Rand des Windfensters geführt wird. Das Windfenster ist als ein von der Bodenstation, insbesondere von einem Anlenkpunkt des Zugseils an der Bodenstation ausgehendes Kugelsegment, innerhalb dessen sich der Kite ohne künstliche Anströmungserhöhung oder eigenen Antrieb aufhalten kann. Bei dem erfindungsgemäßen Verfahren kann die Position des Kites im zweiten Betriebszustand innerhalb des Windfensters liegen und einen Abstand zum Rand des Windfensters haben. Der Abstand zwischen dem Mittelpunkt des Windfensters und dem Kite kann kleiner sein als 80 %, vorzugsweise kleiner sein als 50 %, weiter vorzugsweise kleiner sein als 30 % des Abstands zwischen dem Zentrum des Windfensters und dem Rand des Windfensters. Bei diesem Vergleich werden beide Abstände in derselben Richtung gemessen.

Der Betriebsparameter, anhand dessen im zweiten Betriebszustand die Einholgeschwindigkeit eingestellt wird, kann die von dem Kite auf das Zugseil ausgeübte Zugkraft sein. Bei einem drohenden Kontrollverlust reduziert sich der Auftrieb und damit die Zugkraft. Durch Erhöhen der Einholgeschwindigkeit verbessert sich die Anströmung des Kites, wodurch die Zugkraft wieder größer wird. Die Zugkraft kann auf einen im Wesentlichen konstanten Wert eingestellt werden, indem bei einem Ansteigen der Zugkraft die Einholgeschwindigkeit vermindert wird und indem bei einem Abfallen der Zugkraft die Einholgeschwindigkeit erhöht wird.

Das Verfahren kann so durchgeführt werden, dass ein Sollwert für die Zugkraft vorgegeben ist. Einer Steuereinheit des Kitesystems kann eine Information über den aktuellen Wert der Zugkraft zugeführt werden. Die Steuereinheit kann ein Steuersignal erzeugen, mit dem ein zum Beeinflussen der Einholgeschwindigkeit ausgelegter Aktuator angesteuert wird.

Bei der Information über den Wert der Zugkraft kann es sich um einen Kraftmesswert handeln. Das Kitesystem kann einen Kraftsensor umfassen, der den Messwert liefert. Der Kraftsensor kann innerhalb des Zugstrangs angeordnet sein, der sich zwischen dem Kite und einer das Zugseil haltenden Komponente der Basisstation erstreckt. Der Kraftsensor kann ein Spannungssensor sein, der einen Messwert über die in dem Zugseil anliegende Spannung liefert. Der Kraftsensor kann dazu ausgelegt sein, die über den Leinenbaum oder einen Teil des Leinenbaums übertragene Kraft zu messen. Der Kraftsensor kann dazu ausgelegt sein, die über die Gondel übertragene Kraft zu messen. Wird das Zugseil über eine Zugseilwinde eingeholt und ausgefiert, so kann aus dem auf die Zugseilwinde wirkenden Drehmoment auf die Zugkraft geschlossen werden. Der Kraftmesswert kann sich demnach auch auf das Drehmoment der Zugseilwinde beziehen. Die Zugseilwinde kann so angesteuert werden, dass die Zugkraft beim Einholen des Kites konstant gehalten wird. Dabei kann das gemessene Drehmoment um Massenträgheitskräfte kompensiert werden, um unerwünschte Schwankungen der Zugkraft zu vermeiden. Es kann aus Stromdaten des Frequenzumrichters auf das Drehmoment der Zugseilwinde geschlossen werden.

Es ist auch möglich, das Verfahren ohne unmittelbaren Messwert der Zugseilkraft durchzuführen. Anstatt eines direkten Kraftmesswerts können ein oder mehrere Betriebsparameter verarbeitet werden, die in einer Relation zu der Zugkraft stehen. In einer Ausführungsform werden innerhalb des Leinenbaums auftretende Schwingungen aufgezeichnet und die Schwingungsmesswerte verarbeitet, um die Einholgeschwindigkeit einzustellen. Es hat sich gezeigt, dass typische Schwingungsmuster auftreten, wenn der Kite in die Nähe seiner Stabilitätsgrenze kommt. Das Verfahren kann so durchgeführt werden, dass die Einholgeschwindigkeit erhöht wird, bis die betreffenden Schwingungsmuster gemessen werden, und dass die Einholgeschwindigkeit nach Auftreten der betreffenden Schwingungsmuster vermindert wird, bis die Schwingungsmuster wieder verschwunden sind. Auf diese kann der Einholvorgang so gesteuert werden, dass der Kite immer in der Nähe seiner Stabilitätsgrenze ist. Mit einer hohen Einholgeschwindigkeit wird die Rückholphase verkürzt, was sich positiv auf den Wirkungsgrad des Energieerzeugungssystems auswirkt.

Möglich ist es zusätzlich oder alternativ auch, aus geeigneten Messungen des Luftdrucks auf eine Annäherung an die Stabilitätsgrenze und damit auf eine Änderung der aktuell wirkenden Zugkraft zu schließen. Als Betriebsparameter wird in einer Ausführungsform der absolute Druck gemessen, der in der Umgebung des Kites anliegt. Dem liegt die Erkenntnis zugrunde, dass der Luftdruck in bestimmten Bereichen in der Umgebung des Kites abfällt und in anderen Bereichen in der Umgebung des Kites ansteigt, wenn der Kite sich an die Stabilitätsgrenze annähert. Aus einer Messung des absoluten Drucks kann also auf eine Annäherung an die Stabilitätsgrenze geschlossen werden. In anderen Ausführungsformen wird der Differenzdruck zwischen verschiedenen Stellen des Strömungsprofils gemessen, um auf eine Annäherung an die Stabilitätsgrenze zu schließen. Auch aus dem Verhältnis zwischen Staudruck und Innendruck kann auf die Nähe zur Stabilitätsgrenze geschlossen werden.

Es kann zusätzlich oder alternativ dazu auch aus einer Änderung der Windverhältnisse auf eine Annäherung an die Stabilitätsgrenze und damit auf eine Änderung der aktuell wirkenden Zugkraft geschlossen werden. Dabei kann davon ausgegangen werden, dass die Zugkraft bei einer Erhöhung der Windgeschwindigkeit ansteigt und bei einer Verminderung der Windgeschwindigkeit abfällt. Die Information über eine Änderung der Windverhältnisse kann beispielsweise durch eine Lidar-Messung oder durch eine Ultraschallmessung gewonnen werden. Betreffende Sensoren können beispielsweise an dem Kite oder einer anderen Komponente des Kitesystems angebracht sein. Die Sensoren können dazu ausgelegt sein, Messwerte über die Windverhältnisse in Flugrichtung zu gewinnen. Die Sensoren können dazu ausgelegt sein, Turbulenzen zu erkennen.

Eine Annäherung an die Stabilitätsgrenze hat in vielen Fällen die weitere Folge, dass sich durch die geänderten Strömungsverhältnisse auch die geometrische Form des Kites ändert. Aus einer Änderung in der geometrischen Form des Kites kann folglich ebenfalls auf eine Annäherung an die Stabilitätsgrenze und damit auf eine Änderung der aktuell wirkenden Zugkraft geschlossen werden. Eine Information über die geometrische Form des Kites kann beispielsweise gewonnen werden, indem Bilddaten ober Abstandsdaten ausgewertet werden. In einer Ausführungsform ist das Kitesystem mit ein oder mehreren Bildsensoren und/oder Lidar-Sensoren ausgestattet, um betreffende Daten aufzunehmen. Ein Hinweis auf eine Annäherung an die Stabilitätsgrenze kann beispielsweise daraus abgeleitet werden, dass sich Verformungen im vorderen Teil des aerodynamischen Profils zeigen.

Zum Verstellen des Trimmwinkels kann das Kitesystem einen Trimmmechanismus umfassen, der dazu ausgelegt ist, die Länge von Leinen innerhalb des Leinenbaums relativ zueinander zu verändern. Der Leinenbaum stellt mit einer Mehrzahl von Leinen eine Verbindung zwischen der Gondel und dem Kite her. Der Trimmwinkel kann verändert werden, indem die Länge der in Richtung Hinterkante des Kites laufenden Leinen relativ zu der Länge der in Richtung Vorderkante des Kites laufenden Leinen verändert wird. Wird die Länge der nach hinten laufenden Leinen relativ zur Länge der nach vorne laufenden Leinen verkürzt, so wird der Trimmwinkel des Kites größer. Wird die Länge der nach hinten laufenden Leinen relativ zur Länge der nach vorne laufenden Leinen vergrößert, so wird der Trimmwinkel des Kites kleiner. Es kann einen zwischen der Vorderkante und der Hinterkante liegenden Bereich geben, in dem die Länge des Leinenbaums beim Verstellen des Trimmwinkels unverändert bleibt. Dieser Bereich kann je nach Zweckmäßigkeit näher an der Vorderkante, näher an der Hinterkante oder ungefähr in der Mitte zwischen Vorderkante und Hinterkante liegen.

Das Kitesystem kann einen Steuermechanismus umfassen, um den Kite entlang vorgegebener Flugbahnen zu steuern. Zum Ändern der Flugrichtung kann die Länge von zur linken Seite laufenden Leinen relativ zur Länge von zur rechten Seite laufenden Leinen des Leinenbaums verändert werden. Der Steuermechanismus kann so eingerichtet sein, dass ein Steuern der Flugrichtung unabhängig vom Trimmwinkel möglich ist, auf den der Kite eingestellt ist. Der Steuermechanismus kann so eingerichtet sein, dass die Flugrichtung geändert werden kann, während der Trimmwinkel unverändert bleibt.

Das Kitesystem kann eine elektrische Maschine umfassen, die in der Powerphase mit dem Zugseil angetrieben wird, um elektrische Energie zu erzeugen. Das Kitesystem kann eine Zugseilwinde umfassen, auf die das Zugseil beim Einholen des Zugseils aufgewickelt wird und von der das Zugseil beim Ausfieren des Zugseils abgewickelt wird. Die Zugseilwinde kann mit der elektrischen Maschine gekoppelt sein. Die elektrische Maschine kann dazu ausgelegt sein, wechselweise in einem generatorischen Betrieb und in einem motorischen Betrieb betrieben zu werden. Während der Powerphase, in der das Zugseil unter der Zugkraft des Kites von der Zugseilwinde abgezogen wird, kann die elektrische Maschine im generatorischen Betrieb betrieben werden. Die Zugseilwinde kann die elektrische Maschine antreiben, sodass elektrische Energie erzeugt wird. Während der Rückholphase kann die elektrische Maschine im motorischen Betrieb betrieben werden, sodass die Zugseilwinde von der elektrischen Maschine angetrieben wird und dass das Zugseil entgegen der Zugkraft des Kites eingeholt wird.

Die Basisstation kann eine erdbodengebundene Basisstation sein. Möglich ist auch, dass die Basisstation eine schwimmende Basisstation ist. Die Basisstation kann eine an einem fest Ort angeordnete Basisstation oder eine mobile Basisstation sein. Die elektrische Maschine kann ein Bestandteil der Basisstation sein. Die Zugseilwinde kann ein Bestandteil der Basisstation sein.

Die Erfindung betrifft auch eine Steuereinheit für eine Energieerzeugungsvorrichtung, wobei die Steuereinheit dazu ausgelegt ist, einen Kite, der über ein Zugseil mit einer Basisstation verbunden ist, abwechselnd in einen ersten Betriebszustand und einen zweiten Betriebszustand zu bringen. Im zweiten Betriebszustand ist der Trimmwinkel des Kite kleiner als im ersten Betriebszustand. Die Steuereinheit ist dazu ausgelegt, eine Zugseilwinde so anzusteuern, dass der Kite im zweiten Betriebszustand durch Einholen des Zugseils an die Basisstation herangeholt wird, wobei die Einholgeschwindigkeit in Abhängigkeit von einem den Flugzustand des Kite repräsentierenden Betriebsparameter der Energieerzeugungsvorrichtung verändert wird.

Die Steuereinheit kann eine bauliche Einheit sein. Möglich ist auch, dass die Steuereinheit auf verschiedene Komponenten des Energieversorgungssystems verteilt ist. Die Komponenten können an verschiedenen Orten angeordnet sein.

Die Erfindung betrifft weiter eine Energieerzeugungsvorrichtung mit einer Basisstation, mit einem Kitesystem und mit einer Steuereinheit. Das Kitesystem umfasst einen Kite und eine Gondel, wobei der Kite über einen Leinenbaum mit der Gondel verbunden ist und wobei die Gondel über ein Zugseil mit der Basisstation verbunden ist. Die Steuereinheit ist als erfindungsgemäße Steuereinheit ausgebildet.

Die Erfindung betrifft auch ein Computerprogrammprodukt oder einen Satz von Computerprogrammprodukten, umfassend Programmteile, welche, wenn geladen in einen Computer oder in untereinander vernetzte Computer, die mit einer erfindungsgemäßen Energieerzeugungsvorrichtung verbunden sind, zur Durchführung des erfindungsgemäßen Verfahrens ausgelegt sind.

Die Offenbarung umfasst Weiterbildungen der Steuereinheit und der Energieerzeugungsvorrichtung mit Merkmalen, die im Zusammenhang des erfindungsgemäßen Verfahrens beschrieben sind. Die Offenbarung umfasst Weiterbildungen des Verfahrens mit Merkmalen, die im Zusammenhang der erfindungsgemäßen Steuereinheit oder der erfindungsgemäßen Energieerzeugungsvorrichtung beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Energieerzeugungsvorrichtung;
- Fig. 2:: eine schematische Darstellung einer Betriebsphase der Energieerzeugungsvorrichtung aus Fig. 1;
- Fig. 3:: ein Kitesystem einer erfindungsgemäßen Energieerzeugungsvorrichtung;
- Fig. 4:: die Energiebilanz während eines Betriebszyklus der Energieerzeugungsvorrichtung;
- Fig. 5:: ein Blockschaltbild von einem Aspekt der erfindungsgemäßen Energieerzeugungsvorrichtung;
- Fig. 6:: eine schematische Darstellung des Kitesystems aus Fig. 3 im ersten Betriebszustand des Kite;
- Fig. 7:: die Ansicht gemäß Fig. 6 im zweiten Betriebszustand des Kite;
- Fig. 8:: eine beispielhafte Darstellung einer erfindungsgemäß kompensierten Störung.

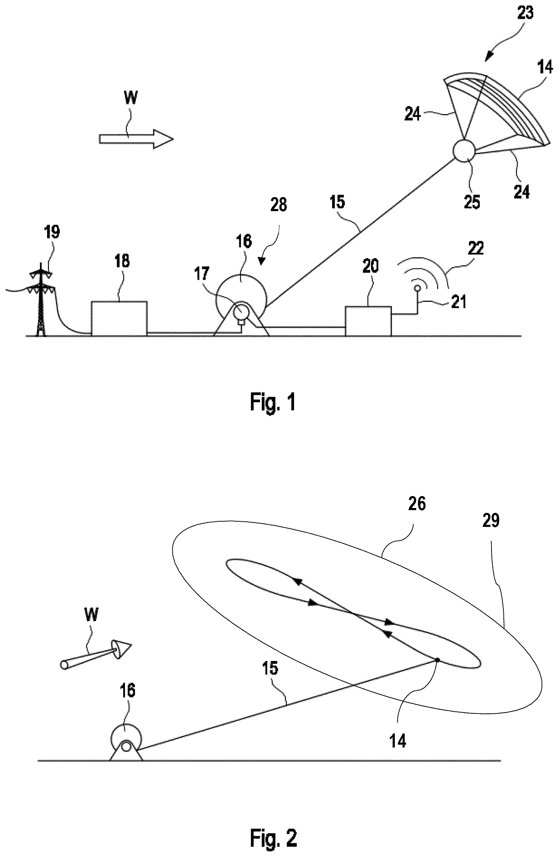

Eine in Fig. 1 gezeigte Energieerzeugungsvorrichtung ist dazu ausgelegt, unter Verwendung eines Kitesystems 23 elektrische Energie zu erzeugen. Das Kitesystem 23 umfasst einen Kite 14, der über einen Leinenbaum 24 mit einer Gondel 25 verbunden ist. Die Gondel 25 ist über ein Zugseil 15 mit einer Basisstation 28 verbunden. Die Basisstation 28 umfasst eine Zugseilwinde 16, mit der das Zugseil 15 eingeholt und ausgefiert werden kann.

Mit der Zugseilwinde 16 gekoppelt ist eine elektrische Maschine 17, die in einem ersten Betriebsmodus als Generator und in einem zweiten Betriebsmodus als Motor arbeitet. Die elektrische Maschine ist über einen elektrischen Leistungsstrang 18, der einen Umrichter und einen Transformator umfasst, an ein öffentliches Übertragungsnetz 19 und/oder einen Batteriepuffer angeschlossen, so dass entweder mit der Maschine 17 erzeugte elektrische Energie in das Übertragungsnetz 19 eingespeist werden kann oder die Maschine 17 mit aus dem Übertragungsnetz 19 entnommener elektrische Energie als Motor betrieben werden kann. Die Vorrichtung umfasst eine Steuereinheit 20, die dazu ausgelegt ist, das Zusammenspiel der Komponenten der Energieerzeugungsvorrichtung zu steuern.

Die Steuereinheit 20 umfasst eine Antenne 21, so dass über eine Funkverbindung 22 Steuersignale mit der Gondel 25 ausgetauscht werden können. Insbesondere werden von der Steuereinheit 20 Steuersignale an die Gondel 25 gesendet, um die Flugrichtung des Kite 14 zu steuern. Unter Nutzung der Steuersignale wird die Länge von Steuerzügen des Leinenbaums 24 verändert, wodurch Einfluss auf die Flugrichtung des Kite 14 genommen wird. Alternativ kann die Steuereinheit 20 auch ein Bestandteil der Gondel 25 sein. Es findet dann eine Signalübermittlung an die Bodenstation statt, um Sollwerte für den Betrieb der Zugseilwinde 16 zu übermitteln.

In dem Ausführungsbeispiel gemäß Fig. 2 wird der Kite 14 entlang einer im Wesentlichen quer zur Windrichtung W ausgerichteten liegenden Acht geführt. Die liegende Acht liegt so, dass der Winkel zwischen dem Wind W und der Richtung des Zugseils möglichst klein ist, so dass eine hohe Kraft auf den Kite 14 wirkt. Während der Kite 14 der Flugbahn folgt, wird eine Zugkraft auf das Zugseil 15 ausgeübt, mit der über die Zugseilwinde 16 die Maschine 17 angetrieben wird. Mit der in diesem Betriebszustand als Generator betriebenen Maschine 17 wird die mechanische Energie in elektrische Energie umgewandelt und über den Leistungsstrang 18 in das öffentliche Übertragungsnetz 19 eingespeist. Möglich ist auch, einen Teil der erzeugten Energie in elektrischer Form in einem Energiespeicher des Leistungsstrangs 18 zu speichern. Auf diese Weise kann elektrische Energie erzeugt werden, bis die Länge des Zugseils 15 ausgeschöpft ist und das Zugseil 15 vollständig von der Zugseilwinde 16 ausgefiert ist. Anschließend wird das Zugseil 15 mit der als Motor betriebenen elektrischen Maschine 17 eingeholt, bevor erneut elektrische Energie erzeugt werden kann.

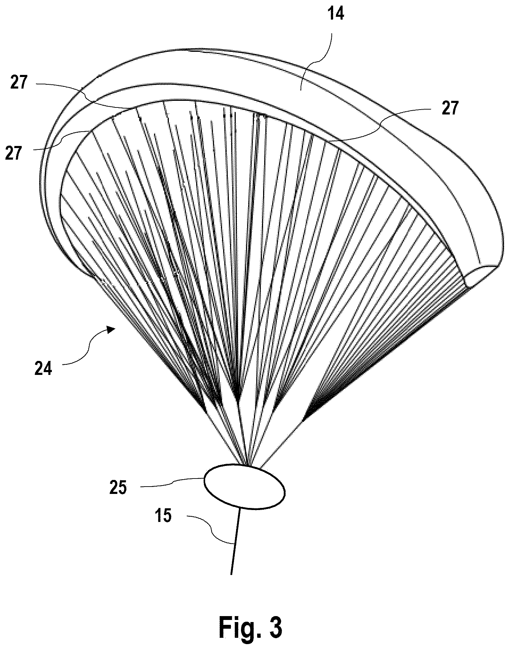

Der Leinenbaum 24 des erfindungsgemäßen Kitesystems 23 umfasst gemäß Fig. 3 eine Vielzahl von Leinen, über die Zugkräfte zwischen dem Kite 14 und der Gondel 25 übertragen werden. Jede Leine vermittelt eine Verbindung zwischen der Gondel 25 und einem Anlenkpunkt 27 an der Unterseite des Kites 14. Indem der durch verschiedene Leinen vermittelte Abstand zwischen der Gondel 25 und den Anlenkpunkten 27 relativ zueinander verändert wird, kann auf die Flugrichtung des Kite 14 und/oder auf den Trimmwinkel des Kite Einfluss genommen werden.

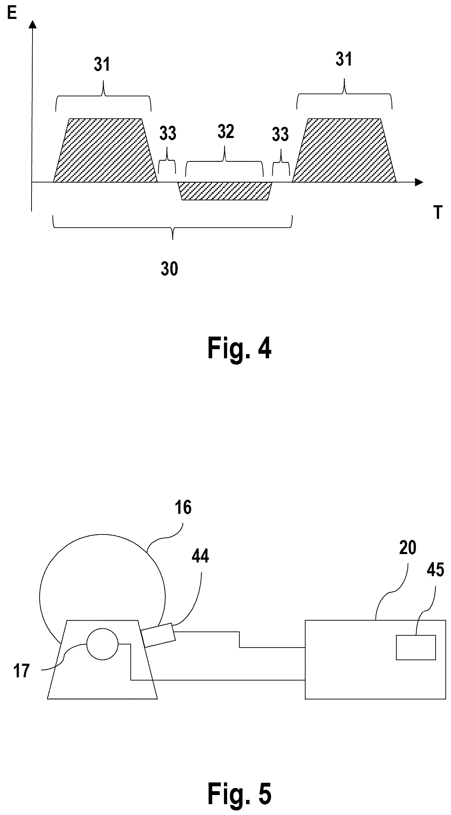

In Fig. 4 ist die erzeugte bzw. verbrauchte elektrische Energie E über der Zeit T aufgetragen. Phasen eines Betriebszyklus 30, in denen die elektrische Maschine 17 generatorisch betrieben wird und in denen elektrische Energie E erzeugt wird, werden als Powerphasen 31 bezeichnet. Phasen, in denen die elektrische Maschine 17 motorisch betrieben wird und in denen elektrische Energie E verbraucht wird, werden als Rückholphasen 32 bezeichnet. Zwischen den Powerphasen 31 und den Rückholphasen 32 können Übergangsphasen 33 liegen. Für den Wirkungsgrad der Vorrichtung ist es von Vorteil, wenn die Übergangsphasen 33 möglichst kurz sind. Die Bilanz an elektrischer Energie E während eines Betriebszyklus 30 ergibt sich als Differenz aus der in der Powerphase 31 erzeugten elektrischen Energie E und der in der Rückholphase 32 verbrauchten elektrischen Energie E.

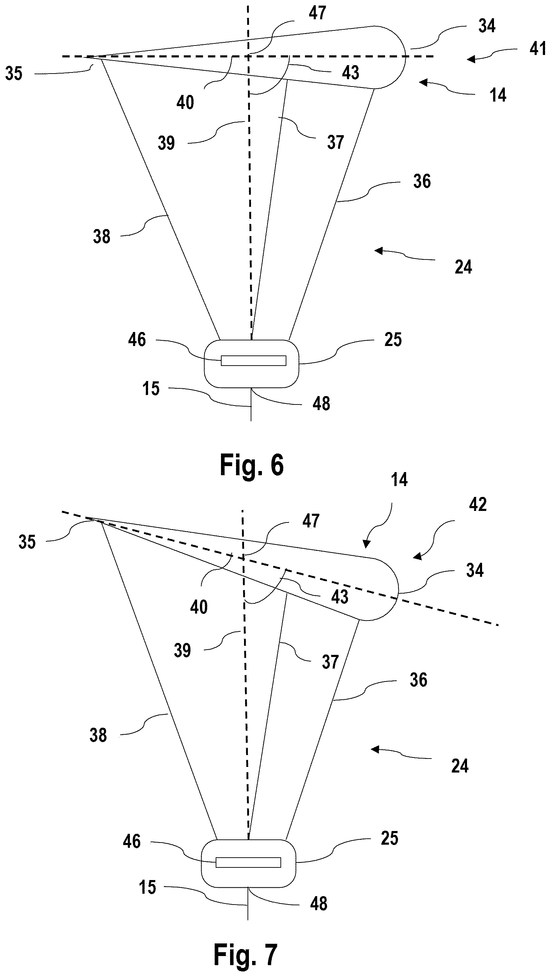

Wie die Fig. 6, 7 zeigen, wird zwischen der Powerphase 31 und der Rückholphase 32 der Trimmwinkel 43 des Kites 14 verändert. In Fig. 6 ist der erste Betriebszustand 41 des Kites 14 gezeigt, den der Kite 14 während der Powerphase 31 hat und in der der Trimmwinkel 43 groß ist. Der Trimmwinkel 43 wird gemessen zwischen einer Trimmlinie 39 und dem nach vorne weisenden Abschnitt einer Profil-Mittellinie 40. Die Trimmlinie 39 erstreckt sich zwischen einem zentralen Punkt 47 der Profil-Mittellinie 40 und dem Anlenkpunkt 48 des Zugseils 15 an der Gondel 25. Das Profil des Kites 14 erstreckt sich zwischen einer Vorderkante 34 und einer Hinterkante 35. In Fig. 6 ist die Profil-Mittellinie 40 eingezeichnet, die eine Verbindung zwischen der Vorderkante 34 und der Hinterkante 35 bildet.

Für einen Übergang von dem in Fig. 6 gezeigten ersten Betriebszustand 41 zu dem in Fig. 7 gezeigten zweiten Betriebszustand 42 werden mit einem Trimmmechanismus 46 Veränderungen am Leinenbaum 24 vorgenommen. Mehrere in Richtung der Hinterkante 35 des Kites 14 führende hintere Leinen 38, von denen in Fig. 6 nur eine einzelne hintere Leine 38 gezeigt ist, werden verlängert. Mehrere in Richtung der Vorderkante 34 des Kites 14 führende vordere Leinen 36 werden verkürzt. In der Mitte liegende Leinen 37 bleiben unverändert lang oder werden nur geringfügig in der Länge verändert. Durch Verlängerung aller nach hinten führenden Leinen des Leinenbaums 24 und entsprechende Verkürzung aller nach vorne führenden Leinen wird der gesamte Kite 14 um eine senkrecht zur Zeichnungsebene ausgerichtete Achse geschwenkt. Es ergibt sich eine Verkleinerung des Trimmwinkels 43 zwischen der Profil-Mittellinie 40 und der Trimmlinie 39, siehe Fig. 7.

Im zweiten Betriebszustand 42 ist die Zugkraft, die von dem Kite 14 auf das Zugseil 15 ausgeübt wird, erheblich geringer als im ersten Betriebszustand 41. Aufgrund dieses geringeren Widerstands kann der Kite 14 in der Rückholphase 32 mit weniger Energie eingeholt werden, als in der Powerphase 31 erzeugt wurde.

Gemäß der schematischen Darstellung in Fig. 5 ist die Zugseilwinde 16 mit einem Drehmomentsensor 44 versehen. Alternativ kann das Drehmoment auch aus den Stromdaten des Frequenzumrichters abgeleitet werden. Auf einen Drehmomentsensor kann dann verzichtet werden. Das Drehmoment ist proportional zu der von dem Zugseil 15 ausgeübten Zugkraft, sodass die Messwerte 49 des Drehmomentsensors 44 ein Maß für die Zugkraft des Zugseils 15 bilden. In der Rückholphase 32 verarbeitet die Steuereinheit 20 die von dem Drehmomentsensor 44 zugeführten Messwerte 49, um den motorischen Betrieb der elektrischen Maschine 17 anzusteuern. Die Steuereinheit 20 vergleicht dazu den Messwert des Drehmomentsensors 44 mit einem in einem Speicherbaustein 45 hinterlegten Sollwert für die Zugkraft. Ist der Messwert niedriger als der Sollwert, wird die Geschwindigkeit erhöht, mit der die elektrische Maschine 17 die Zugseilwinde 16 antreibt. Ist der Messwert höher als der Sollwert, wird die Geschwindigkeit der elektrischen Maschine 17 reduziert.

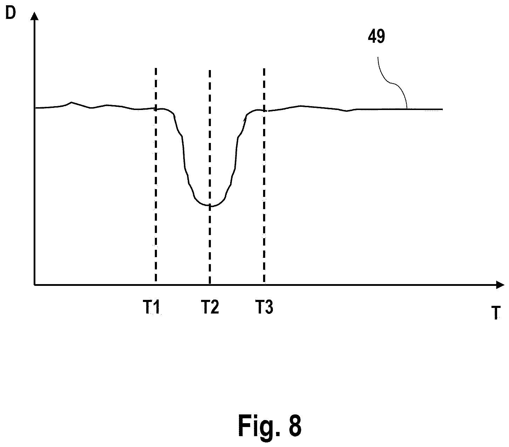

In Fig. 8 sind die Messwerte 49 des Drehmoments D über der Zeit T während eines Abschnitts der Rückholphase dargestellt. Vor dem Zeitpunkt T1 hat das Drehmoment D einen im Wesentlichen konstanten Wert. Zwischen den Zeitpunkten T1 und T2 sinkt das Drehmoment D aufgrund eines instabilen Flugzustands des Kites 14 ab, was mit dem Drehmomentsensor 44 registriert wird. Die Drehgeschwindigkeit der Zugseilwinde 16 wird erhöht, sodass das Drehmoment D zwischen den Zeitpunkten T2 und T3 ansteigt. Ab dem Zeitpunkt T3 ist der Kite 14 wieder in einem stabilen Flugzustand, in dem die Messwerte 49 des Drehmoments D im Wesentlichen unverändert bleiben. Der gesamte in Fig. 8 dargestellte Zeitraum liegt innerhalb eines mittleren Abschnitts der Rückholphase. In Fig. 8 sind keine Übergänge zu vorherigen oder nachfolgenden Powerphasen dargestellt.

Auf diese Weise wird die Einholgeschwindigkeit des Kites 14 in einem geschlossenen Regelkreis so verändert, dass die auf den Kite 14 ausgeübte Zugkraft im Wesentlichen konstant bleibt. Damit geht insbesondere die Wirkung einher, dass bei einem drohenden Stabilitätsverlust die Einholgeschwindigkeit automatisch erhöht wird, sodass der Flugzustand des Kites 14 sich wieder stabilisiert. Es wird die Möglichkeit eröffnet, den Kite 14 in einem aerodynamischen Zustand zu betreiben, der ohne Anwendung des erfindungsgemäßen Verfahrens nicht stabil wäre.

## Patentansprüche

1. Verfahren zum Betreiben einer Energieerzeugungsvorrichtung, wobei die Energieerzeugungsvorrichtung eine Basisstation (28) und ein Kitesystem (23) mit einem Kite (14) und mit einer Gondel (25) umfasst, wobei der Kite (14) über einen Leinenbaum (24) mit der Gondel (25) verbunden ist, wobei die Gondel (25) über ein Zugseil (15) mit der Basisstation (28) verbunden ist, und wobei über eine mit dem Zugseil (15) ausgeübte Zugkraft elektrische Energie erzeugt wird, wobei der Kite (14) abwechselnd in einen ersten Betriebszustand (41) und einen zweiten Betriebszustand (42) gebracht wird, wobei im zweiten Betriebszustand (42) der Trimmwinkel (43) des Kite (14) kleiner ist als im ersten Betriebszustand (41), wobei im zweiten Betriebszustand (42) der Kite (14) durch Einholen des Zugseils (15) an die Basisstation (28) herangeholt wird und wobei die Einholgeschwindigkeit in Abhängigkeit von einem den Flugzustand des Kite (14) repräsentierenden Betriebsparameter (49) der Energieerzeugungsvorrichtung verändert wird.

2. Verfahren nach Anspruch 1, wobei der Betriebsparameter einer Steuereinheit (20) der Energieerzeugungsvorrichtung als Eingangsgröße zugeführt wird.

3. Verfahren nach Anspruch 2, wobei der Betriebsparameter in der Steuereinheit (20) verarbeitet wird, um einen Steuerbefehl zum Einstellen der Einholgeschwindigkeit zur erzeugen.

4. Verfahren nach einem der Ansprüche 1 bis 3, wobei die Position des Kites (14) im zweiten Betriebszustand (24) einen Abstand zum Rand des Windfensters (29) hat.

5. Verfahren nach einem der Ansprüche 1 bis 4, wobei der Betriebsparameter die von dem Kite (14) auf das Zugseil (15) ausgeübte Zugkraft ist.

6. Verfahren nach Anspruch 5, wobei der Betriebsparameter in Form eines Kraftmesswerts verarbeitet wird.

7. Verfahren nach Anspruch 6, wobei die Energieerzeugungsvorrichtung eine Zugseilwinde (16) für das Zugseil (15) umfasst und wobei der Kraftmesswert sich auf ein Drehmoment bezieht, das auf die Zugseilwinde (16) wirkt.

8. Verfahren nach einem der Ansprüche 1 bis 7, wobei das Kitesystem (23) einen Trimmmechanismus (46) umfasst, der dazu ausgelegt ist, zum Verstellen des Trimmwinkels (43) die Länge von zu einer Vorderkante (34) des Kites (14) führenden Leinen (36) relativ zur Länge von zu einer Hinterkante (35) des Kites (14) führenden Leinen (38) zu verändern.

9. Steuereinheit für eine Energieerzeugungsvorrichtung, wobei die Steuereinheit (20) dazu ausgelegt ist, einen Kite (14), der über ein Zugseil (15) mit einer Basisstation (28) verbunden ist, abwechselnd in einen ersten Betriebszustand (41) und einen zweiten Betriebszustand (42) zu bringen, wobei im zweiten Betriebszustand (42) der Trimmwinkel (43) des Kite (14) kleiner ist als im ersten Betriebszustand (41), wobei die Steuereinheit (20) dazu ausgelegt ist, eine Zugseilwinde (16) so anzusteuern, dass der Kite (14) im zweiten Betriebszustand (42) durch Einholen des Zugseils (15) an die Basisstation (28) herangeholt wird, wobei die Einholgeschwindigkeit in Abhängigkeit von einem den Flugzustand des Kite (14) repräsentierenden Betriebsparameter (49) der Energieerzeugungsvorrichtung verändert wird.

10. Energieerzeugungsvorrichtung, mit einer Basisstation (28), mit einem Kitesystem (23) und mit einer Steuereinheit (20), wobei das Kitesystem (23) einen Kite (14) und eine Gondel (25) umfasst, wobei der Kite (14) über einen Leinenbaum (24) mit der Gondel (25) verbunden ist, wobei die Gondel (25) über ein Zugseil (15) mit der Basisstation (28) verbunden ist, wobei die Steuereinheit nach Anspruch 9 ausgebildet ist.

11. Computerprogrammprodukt oder Satz von Computerprogrammprodukten, umfassend Programmteile, welche, wenn geladen in einen Computer oder in untereinander vernetzte Computer, die mit einer Vorrichtung nach Anspruch 10 verbunden sind, zur Durchführung des Verfahrens nach einem der Ansprüche 1 bis 8 ausgelegt sind.
